# EUROPEAN PATENT APPLICATION

(11) **EP 4 475 429 A1**
(43) Date of publication of application: **11.12.2024**
(21) Application number: 24180856.7
(22) Date of filing: 07.06.2024
(51) Int. Cl.: H02S 40/32, H02S 40/34

(54) **BRACKET FOR POWER DEVICE**

(30) Priority: 09.06.2023 US 202363507113 P; 15.06.2023 US 202363508345 P
(71) Applicant: Solaredge Technologies Ltd., Herzeliya 4673335 (IL)
(72) Inventor: SCHWARTZ, Guy, 4673335 Herzeliya (IL); MAGALI, Niv, 4673335 Herzeliya (IL); YEHUDA, Roni, 4673335 Herzeliya (IL); SONIS, Yosef, 4673335 Herzeliya (IL); BOGOL, Artium, 4673335 Herzeliya (IL); GAK, Vyacheslav, 4673335 Herzeliya (IL)
(74) Representative: V.O.

(57) **Abstract**

A bracket for attaching a power device to a power generation system may include a base configured to connect to a housing of a power device, a plate configured to attach to a support rail of the system, and a connecting element. The plate may include at least one shelf protruding from the plate for abutting a second surface of the rail. A bracket may include one or more clips for attaching to an attachment point of a power generation system, such as frames, rails, flanges, or protrusions of the system. The clips may include opposing structures for clamping the bracket to the attachment point, and one or more spikes configured to apply additional localized clamping force to sections of the attachment point.

## Description

### CROSS-REFERENCE TO RELATED APPLICATIONS

This application claims the benefit of U.S. Provisional Patent Application No. 63/507,113 filed on June 9, 2023, and U.S. Provisional Patent Application No. 63/508,345 filed on June 15, 2023. The above referenced applications are hereby incorporated by reference in their entirety for all purposes.

### BACKGROUND

Power devices may use brackets, fixtures, or supports. For example, in the field of solar power, brackets, fixtures, or supports may be used for power devices.

### SUMMARY

The following presents a simplified summary of various concepts disclosed herein. This summary is not an extensive overview and is not intended to identify key or critical elements or to delineate the scope of the claims. This summary is not intended to limit or constrain the present disclosure.

Aspects of the disclosure relate to fixtures, supports or brackets (used interchangeably herein) that may include a base and a plate. The base may be configured to connect to a housing of a power device. The plate may be configured to attach to a frame, a rail, or a protrusion of a component of a power generation system. For example, the plate may be configured to abut a first portion of a rail. A connecting element may be disposed to extend between the base and the plate. For example, the connecting element may be configured to position the base so that the base is offset in relation to the plate. The fixtures, supports, or brackets may include at least one shelf that protrudes from the plate. The at least one shelf may be shaped such that the shelf may abut a second surface of the rail. The at least one shelf may function to limit the movement of the housing of the power device with respect to the rail.

Aspects of the disclosure also relate to fixtures, supports, or brackets that may be used to mount power devices. According to these aspects, the fixtures, supports, or brackets may comprise a base and a plate. The base may be configured to connect to a housing of a power device (such as an optimizer, a junction box, a rapid shutdown device, or an electronics housing). The plate may be configured to attach to a frame of a power generating device such as a photovoltaic panel. A connecting element may be disposed between the base and the plate. The connecting element may extend between the base and the plate. Additionally, the fixtures, supports, or brackets may include one or more clips extending from the plate. A first type of clip may be configured to fix onto the frame of the power generating device and limit the moving of the power device with respect to the frame. For example, the first type of clip may be configured to attach to a frame of a photovoltaic panel. The clip may include one or more spikes configured to secure the clip to the frame. The term spike as used herein means a protrusion having a sharp edge or point, such as an edge or point with a cross section angle of between 45 and 135 degrees. A second type of clip may also be disposed on the plate. This second type of clip may be oriented perpendicularly to the first type of clip and may include one or more spikes.

Aspects of the disclosure also relate to retrofit fixtures, supports, and/or brackets that may be used to mount legacy power devices to frames of photovoltaic panels. The retrofit fixtures, supports, and/or brackets may comprise a central portion and two clips on either side of the central portion. The clips may be symmetrical, and each clip may comprise opposing structures that clamp to a frame. Each structure may comprise one or more spikes to secure the clip to the frame. For example, the clip on one side of the central portion may be used to attach the clip to a frame of a photovoltaic panel, and the clip on the opposing side of the central portion may be used to attach the power device. For example, the clip on one side of the central portion may be used to attach the clip to a power device, and the clip on the opposing side of the central portion may be used to attach a frame of a photovoltaic panel.

These and other features and advantages are described in greater detail below.

### BRIEF DESCRIPTION OF THE DRAWINGS

The present disclosure is illustrated by way of example and is not limited in the accompanying figures in which like reference numerals may indicate similar elements.
FIG. 1A shows a front view of an example bracket with a power device housing.
FIG. 1B shows a side view of an example bracket with a power device housing.
FIG. 2 shows a side view of an example bracket with a power device housing and a rail.
FIG. 3A shows a side view of an example bracket.
FIG. 3B shows a perspective view of an example bracket.
FIG. 4A shows a front view of an example bracket.
FIG. 4B and FIG. 4C show side views of an example bracket.
FIG. 4D shows a perspective view of an example bracket.
FIG. 5 shows a front view of an example bracket.
FIG. 6 shows a front view of an example bracket.
FIG. 7 shows a front view of an example bracket.
FIG. 8 shows a front view of an example bracket.
FIG. 9 shows a front view of an example bracket.
FIG. 10A shows an isometric view of an example retrofit bracket.
FIG. 10B shows a top view of an example retrofit bracket.
FIG. 10C shows a side view of an example retrofit bracket.
FIG. 10D shows an example retrofit bracket attached to a frame.

### DETAILED DESCRIPTION

In the following description, reference is made to the accompanying drawings, which form a part hereof, and in which are shown, by way of illustration (e.g., schematic illustration), various examples of the disclosure. It is to be understood that the examples shown and/or described are non-exclusive, and other examples may be practiced, and structural and functional modifications may be made without departing from the scope of the present disclosure.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Apparatuses, systems and methods disclosed herein may be configured to provide a structural support in the form of a bracket or other support for power devices, such as optimizers used in the generation of solar electricity. As discussed above, in some examples, the structural support or bracket may include a base and a plate. The base may connect to a housing of a power device (such as a DC power optimizer used in, e.g., renewable energy production). The plate may attach to a frame, a rail, or a protrusion of a component (e.g., power generating device such as PV panel) of a power generation system. For example, the plate may be configured to abut a first portion of the rail. As used herein, the term "configured to abut" may mean that a first structure is configured to match in shape with the second structure, such that a first surface of the first structure and a second surface of the second structure comprise matching complementary shapes. The matching complementary shapes may reduce or minimize the angular motion between the two structures when the distance between the first and second surfaces is minimized. A connecting element may be disposed between the plate and the base, extending between the base and the plate. For example, the connecting element may be configured to position the base so that the base is offset in relation to (or with respect to) the plate. The fixture, support, or bracket may include least one shelf that protrude from the plate. The least one shelf may be shaped such that they abut a second surface of the rail. The least one shelf may also function to limit the movement of a housing of the power device with respect to the rail.

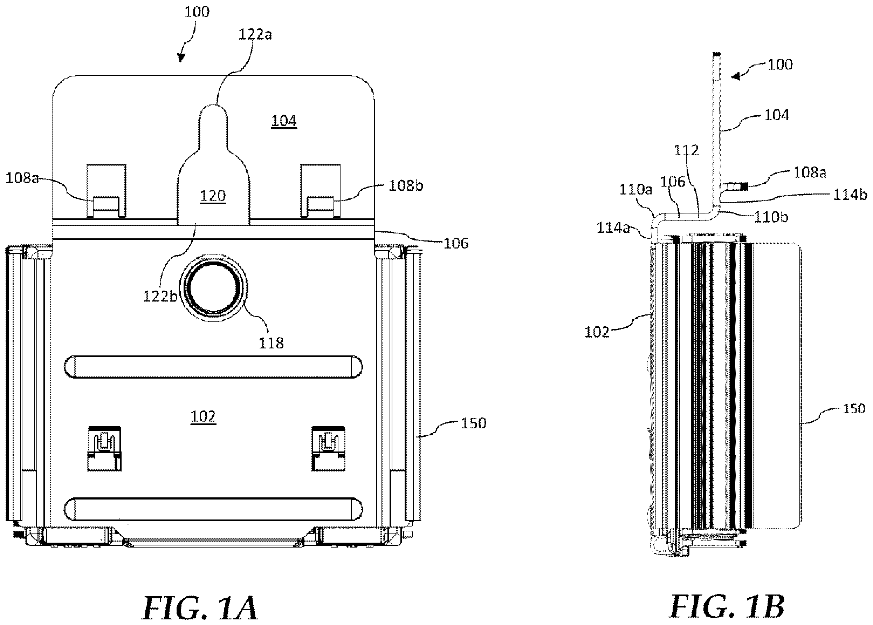

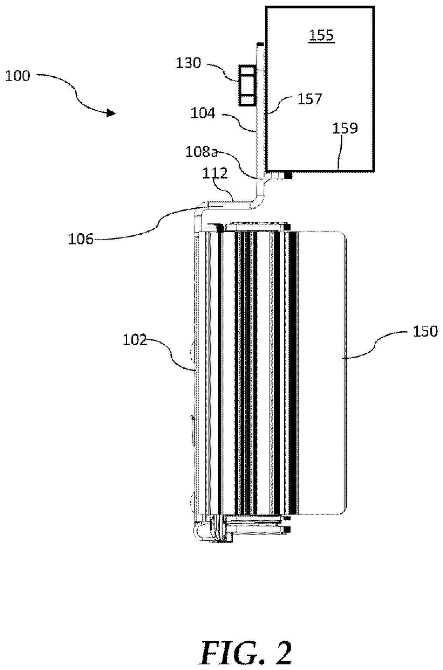

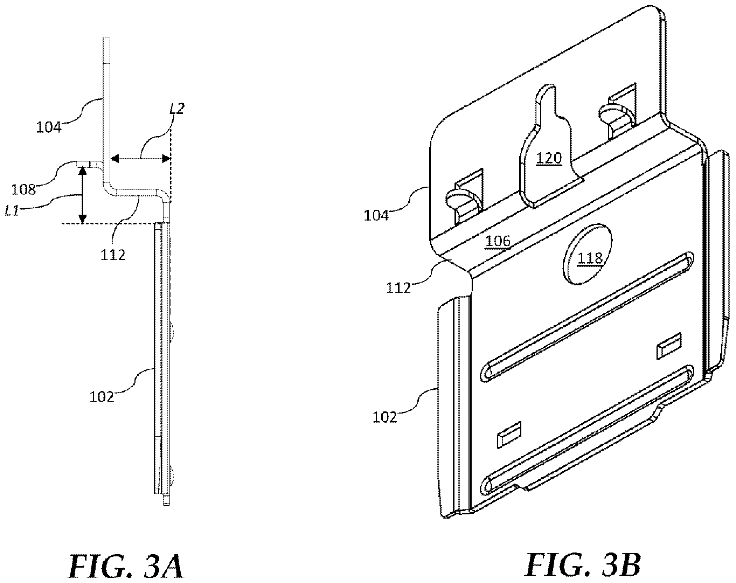

Reference is made to FIG. 1A and FIG. 1B, which show a front view and a side view schematic illustrations of an example bracket with a power device housing, to FIG. 2, which shows a side view schematic illustration of an example bracket with a power device housing and a rail, and to FIG. 3A and FIG. 3B, which show a side view and perspective view schematic illustrations of an example bracket.

The bracket 100 may include a base 102 configured to connect to a housing 150 of a power device. The bracket 100 may include a plate 104 configured to attach to a rail 155 of a photovoltaic (or PV, solar) panel system. For example, the plate 104 may be configured to abut a first surface 157 of the rail 155. The bracket 100 may include a connecting element 106 extending between the base 102 and the plate 104. For example, the connecting element 106 may position the base 102 in an offset manner (or at an offset) with respect to the plate 104. The bracket 100 may include at least one shelf 108 (e.g., 108a, 108b) protruding from the plate 104. For example, the at least one shelf 108 may be shaped to abut a second surface 159 of the rail 155, which position may limit movement of the housing 150 of the power device in relation to the rail 155.

The bracket 100 may be configured to connect to a power generation system, such as a photovoltaic (PV) system or a portion thereof. One or more examples herein may describe elements of a PV system, but the apparatus and methods described herein are applicable to other types of power generation systems that comprise distributed structures. The bracket 100 may be configured to connect to a housing 150 of a power device of a power generation system. The power device may include an optimizer, a junction box, a rapid shutdown device, or an electronics housing. The power device may include a converter. The bracket 100 may be configured to connect to a rail 155 or a frame of the power generation system. The rail 155 may be configured to support a plurality of power devices and/or housings thereof. The plurality of power devices and/or housings thereof may be connected to the rail via one or more brackets, such as the bracket 100 as described herein. The frame may be configured to support one or more photovoltaic (or PV, solar) panels. The rail 155 and/or frame may include a rod. The rail 155 and/or frame may be rigid.

Bracket 100 may be composed of a single unit. For example, the components of the bracket (for example, any one or more of the base 102, the plate 104, the connecting element 106, the shelf 108, etc.) may be integral with each other. Two or more components of the bracket 100 may be processed from a single piece of material, such as, for example, by bending, extruding, cutting, and the like. Two or more components of the bracket 100 may be welded together or adhered (or glued) together. The bracket 100 may comprise (e.g., be composed of) a thermally conductive material.

The base 102 may be configured to connect to a housing of a power device. For example, the base 102 of the bracket 100 may be configured to fit with the housing of a power device, such as the housing 150. The base 102 may be configured to close off and/or seal the housing. The base 102 may be a cover for the housing of the power device. One or more edges of the base 102 may be sized and shaped to connect to (e.g., slide into, fit into, etc.) the housing. For example, the base 102 may include one or more rims sized and shaped to fit or slide into the housing.

The bracket 100 may include the plate 104. The base 102 may be connected to the plate 104. The plate 104 may comprise a flat or essentially flat shape (e.g., with flat surfaces). The plate 104 may be rigid, semi-rigid, semi-flexible, or flexible. The plate 104 may include one or more attachment mechanisms configured to attach to a component of a power generation system, such as a PV system. The one or more attachment mechanisms may be configured to attach to an attachment point of a system, such as a frame, a flange, a rail, or protrusion of the PV system. The attachment point (e.g., frame, flange, rail, protrusion, etc.) may be part of a mounting structure for the system, part of a photovoltaic panel, and/or a protrusion of one of the devices of the system. The one or more attachment mechanisms may be configured to attach to an attachment point with a certain thickness or size. For example, the one or more attachment mechanisms may include clips. For example, the one or more attachment mechanisms may be configured to attach to a rail of the PV system, such as the rail 155. The plate 104 may be shaped to receive a portion of the PV system. The shape of the plate 104 may be complementary to the shape of the portion of the PV system to which the plate 104 is attached. For example, the plate 104 may have a shape complementary to the rail or the frame of the PV system. The plate 104 may include one or more surfaces configured to attach to the PV system or one or more portions thereof. For example, the plate 104 may be configured to abut a first surface of the rail, such as the first surface 157 of the rail 155.

The plate 104 may be aligned with the base 102. The plate 104 may be aligned with the base 102 with an offset, such that the plate 104 and the base 102 are approximately (or substantially, about) parallel. Being approximately parallel may include having one or more axes, such as longitudinal axes of the base 102 and the plate 104, which may be parallel. Being approximately parallel may include having one or more axes, such as the longitudinal axes of the base 102 and the plate 104, which may have an acute angle therebetween. Being approximately parallel may include having one or more axes, such as the longitudinal axes of the base 102 and the plate 104, which may form an angle of 0 degrees to 10 degrees therebetween. For example, a first surface of the plate 104 and a second surface of the base 102 may be essentially parallel.

The base 102 and the plate 104 may be connected by a connecting element 106. The connecting element 106 may be a continuation of the base 102 which connects to the plate 104. The connecting element 106 may be a continuation of the plate 104 which connects to the base 102. The connecting element 106 may be a portion of a single piece in which the plate 104, the base 102, and the connecting element 106 are integral. The connecting element 106 may be rigid or semi-rigid.

The connecting element 106 may have a first edge abutting the base 102. The first edge may extend along an edge of the base 102. The first edge may include one or more openings. The first edge may be welded to the base 102. The first edge may extend along only a portion of the edge of the base 102. The connecting element 106 may have a second edge abutting the plate 104. The second edge may extend along an edge of the plate 104. The second edge may include one or more openings. The second edge may be welded to the plate 104. The second edge may extend along only a portion of the edge of the plate 104.

The connecting element 106 may include a bent strip. The connecting element 106 may include a bent plate. The connecting element 106 may comprise one or more bent portions (e.g., bends) 110 (e.g., 110a, 110b). The one or more bent portions 110 may include a first bent portion (e.g., bend) 110a and a second bent portion (e.g., bend) 110b. The one or more bent portions 110 may be disposed between the base 102 and the plate 104, thereby positioning the base 102 and the plate 104 at an offset, such as described in greater detail elsewhere herein.

The one or more bent portions 110 may be disposed in a middle section of the connecting element 106. The one or more bent portions 110 may be distanced from the housing of the power device. The one or more bent portions 110 may have one or more angles ranging between 1 degree and 90 degrees. The one or more bent portions 110 may have one or more angles ranging between 60 degree and 90 degrees. The one or more bent portions 110 may have one or more angles ranging between 60 degree and 150 degrees. The one or more bent portions 110 may have one or more angles ranging between 75 degree and 110 degrees. The one or more bent portions 110 may have one or more angles ranging between 85 degree and 125 degrees.

The connecting element 106 may include at least one first portion 112 approximately perpendicular to at least one of the base 102 and the plate 104. The at least one first portion 112 may be disposed between the first bent portion 110a and the second bent portion 110b. The connecting element 106 may include at least one second portion (e.g., any one or more of the portions 114a and 114b) substantially parallel to at least one of the first surface of the base 102 and the second surface of the plate 104.

The one or more bent portions 110 may be configured to receive a substantial amount of force while maintaining the position of the base 102 in relation to the plate 104 essentially the same. The one or more angles of the one or more bent portions 110 may be configured to remain essentially the same while force is applied to any one or more of the base 102, the plate 104, and/or the connecting element 106. The angles being essentially the same may include a range of between 0 degrees and 10 degrees difference. The angles being essentially the same may include a range of between 0 degrees and 5 degrees difference. The angles being essentially the same may include a range of between 0 degrees and 2 degrees difference.

The connecting element 106 may be configured to maintain the distance (e.g., difference in height) between the base 102 and the plate 104 (the distance LI as depicted in FIG. 3A is essentially fixed or constant). The connecting element 106 may be configured to maintain the distance between the base 102 and the plate 104 at a range of between 5 mm and 20 mm. The connecting element 106 may be configured to maintain the distance between the base 102 and the plate 104 at a range of between 5 mm and 10 mm. The connecting element 106 may be configured to maintain the distance between the base 102 and the plate 104 at a range of between 3 mm and 15 mm. The connecting element 106 may be configured to maintain the distance between the base 102 and the plate 104 at a range of between 2 mm and 25 mm. The distance between the plate 104 and the base 102 may be at least 5mm.

The connecting element 106 may be configured to position the base 102 at an offset in relation to the plate 104. The connecting element 106 may be configured to maintain the offset between the base 102 and the plate 104 (the distance L2 as depicted in FIG. 3A is essentially fixed or constant). The connecting element 106 may be shaped to position the power device (or the housing thereof) relative to the first surface of the rail, at an offset. The offset between the base 102 and the plate 104 may be the distance between the longitudinal axis of the base 102 and the longitudinal axis of the plate 104. The distance of the offset may be between 5 mm and 25 mm. The distance of the offset may be between 15 mm and 35 mm. The distance of the offset may be between 2 mm and 10 mm. The distance of the offset may be between 1 mm and 15 mm. The offset may be at least 10 mm. The offset may be at least 20 mm. The offset may be at least 25 mm.

The bracket 100 may include at least one shelf 108. The at least one shelf may be configured to support at least a portion of the PV system such that when a positive force is applied to the housing 150, the distance between the shelf and the housing is fixed. The shelf may be protruding from the plate 104. The shelf 108 may be protruding from the connecting element 106. The at least one shelf 108 may be shaped to abut the second surface of the rail, such as the second surface 159 of the rail 155. The shelf 108 may be configured to limit movement of the housing 150 of the power device in relation to the rail 155.

The shelf 108 may be rigid or semi-rigid. The at least one shelf 108 may include a cut-out portion of the plate 104. The at least one shelf 108 may include a cut-out portion of the connecting element 106. The shelf 108 may include a cut-out and bent portion of the plate 104 and/or the connecting element 106. The at least one shelf 108 and the plate 104 may form an angle of between 60 degrees to 120 degrees therebetween. The at least one shelf 108 and the plate 104 may form an angle of between 70 degrees to 100 degrees therebetween. The at least one shelf 108 and the plate 104 may form an angle of between 40 degrees to 160 degrees therebetween. The at least one shelf 108 may be perpendicular to the plate 104.

The distance between the at least one shelf 108 and the housing (e.g., housing 150) may be at least 5 mm. The distance between the at least one shelf 108 and the housing may be at least 15 mm. The distance between the at least one shelf 108 and the housing may be at least 25 mm. The distance between the at least one shelf 108 and the housing may be at least 50 mm. The distance between the at least one shelf 108 and the housing may be between 4 mm and 10 mm. The distance between the at least one shelf 108 and the housing may be between 7 mm and 30 mm. The distance between the at least one shelf 108 and the housing may be between 10 mm and 50 mm.

The plate 104 may include an elongated opening 120. The elongated opening 120 may be configured for attaching the plate to the PV system using an attachment device 130, such as, for example, a rivet, a bolt, a screw, and the like. The elongated opening 120 may extend towards the base 102 and/or towards the connecting element 106. The elongated opening 120 may extend along at least a portion of a longitudinal axis of the plate 104. The elongated opening 120 may have a width, measured perpendicularly to the longitudinal axis of the plate 104. The width of the elongated opening 120 may vary along the height of the elongated opening. The height of the elongated opening 120 may be perpendicular to the width of the elongated opening 120.

The width of the elongated opening 120 may increase from a first end 122a to a second end 122b thereof. The first end 122a of the elongated opening 120 may be positioned centrally in the plate 104. The second end 122b of the elongated opening may be positioned on the plate 104 and near the connecting element 106. The shape of the elongated opening 120 may be bell-shaped. The wider portion of the bell-shape may be at the second end 122b of the opening. The shape of the elongated opening 120 may be cone shaped or trapezoid shaped. The wider portion of the cone or trapezoid shape may be at the second end 122b of the opening. A securing mechanism, such as a bolt, may be inserted into the opening near the second end 122b, and the plate 104 may be moved so that the bolt reaches the first end 122a. The bolt may be tightened against the rail 155.

The bracket 100 may include one or more potting openings 118 for setting a potting material inside the housing 150. The base 102 may include the one or more potting openings 118. The one or more potting openings 118 may be configured to receive potting material into the housing 150 of the power device.

A two-step potting process may be performed with respect to the housing of the power device. The two-step potting process may include inserting (e.g., feeding, placing, etc.) a portion of the potting material into the housing when the housing is open (e.g., before the bracket 100 is connected or placed over the housing 150). The two-step potting process may include placing the bracket onto the housing. The two-step potting process may include connecting the bracket to the housing. The two-step potting process may include sliding the bracket into the housing. The two-step potting process may include placing more potting material into the housing through the one or more potting openings 118. During the two-step potting process, the housing may receive the potting material until the housing is full. The one or more potting openings 118 may be disposed on the bracket 100 in a way that may enable potting of the housing without trapping air inside. Since the bracket may be thermally conductive, using the two-step potting process may enable an increase in the efficiency of heat transfer from the power device. The bracket is fixed to the housing, for example, for using the two-step potting process.

As discussed above, aspects of the disclosure relate to fixtures, supports, and/or brackets that can be used to mount power devices. According to these aspects, the fixtures, supports, and/or brackets may comprise a base and a plate. The base may be configured to connect to a housing of a power device (such as an optimizer, a junction box, a rapid shutdown device, or an electronics housing). The plate may be configured to attach to the frame of a power generating device such as a photovoltaic panel. A connecting element may be disposed between the base and the plate. The connecting element may extend between the base and the plate. Additionally or alternatively, the fixtures, supports, and/or brackets described below may include one or more clips extending from the plate. A first type of clip may be configured to fix onto the frame of the power generating device and limit the movement of the power device with respect to the frame. A second type of clip may be disposed on the plate. This second type of clip may be oriented perpendicularly to the first type of clip and may have one or more spikes. In some examples, the first type of clip may also include one or more spikes.

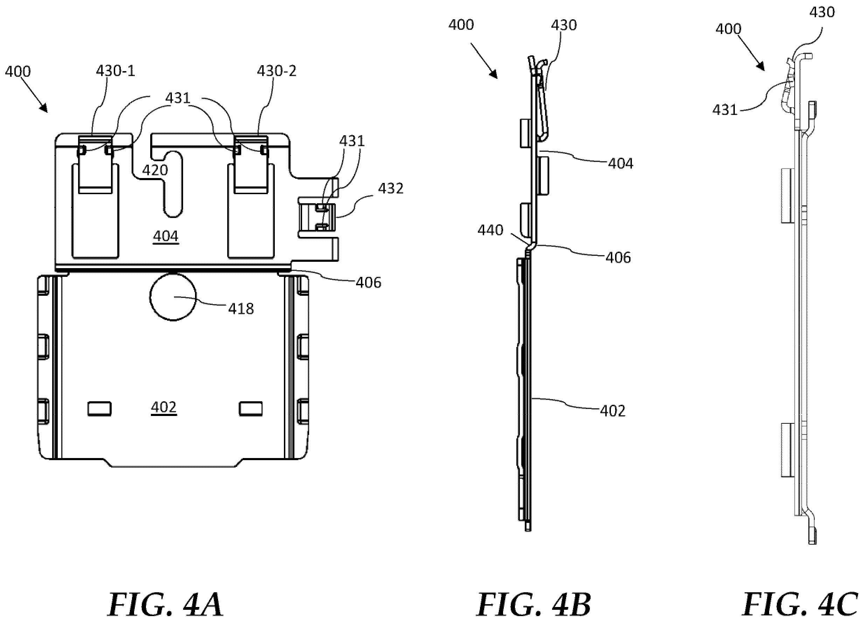

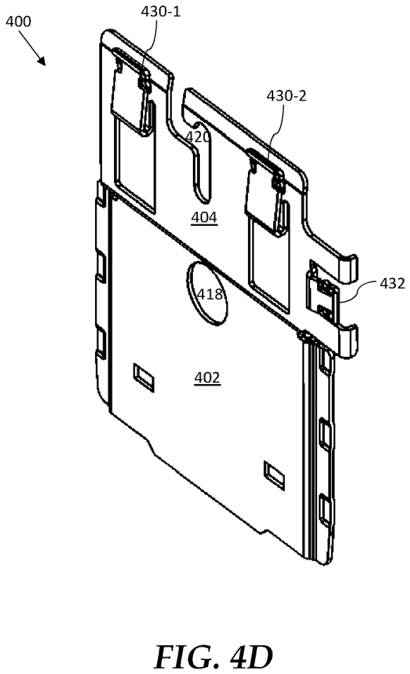

Reference is made to FIG. 4A, which shows a front view schematic illustration of an example bracket, to FIG. 4B and FIG. 4C, which show side view schematic illustrations of an example bracket, and to FIG. 4D, which shows a perspective view schematic illustration of an example bracket.

As shown in FIGs. 4A, 4B, 4C, and 4D, bracket 400 may comprise a base 402, a plate 404, and a connecting element 406. Any or all portions of the bracket 400 may be constructed of a thermally conductive material (such as metals, alloys, epoxies, or any suitable other thermally conductive material). The base 402 may be configured to connect to a housing of a power device (such as housing 150). The plate 404 may be configured to attach to a frame (such as rail 155) of a power generating device. The connecting element 406 extends between the base 402 and the plate 404. For example, the connecting element 406 may cause an offset between the base 402 and the plate 404. For example, this offset may be greater than or equal to 1 mm. The connecting element 406 may cause the spacing or distance between the base 402 and the plate 404 to be at least 5 mm.

As shown in FIG. 4B, the connecting element 406 may connect the base 402 and the plate 404 such that they are substantially or approximately parallel. The connecting element 406 may include a perpendicular portion 440 that is substantially or approximately perpendicular to at least one of the base 402 and the plate 404. The connecting element 406 may be rigid, semi-rigid, or flexible.

Bracket 400 may also include one or more clips of a first type (such as clips 430-1 and 430-2, collectively referred to as first clips 430). While the figures show the plate 404 with only two first clips 430 (such as clips 430-1 and 430-2), it should be appreciated that any suitable number of first clips 430 could be used and still be within the scope of this disclosure. For example, first clips 430 may be configured to extend from the plate 404 and also configured to fix onto a rail and/or frame (such as rail 155) in order to limit the movement of a housing of a power device (such as housing 150) with respect to the rail and/or frame (such as rail 155). First clips 430 may be created by bending a portion of the base over itself, or having separate sides of the clip along the length of an edge of the bracket.

First clips 430 may comprise one or more spikes 431 and the first clips 430 may be fixed onto a first side of a rail or frame (such as rail 155). The plate 404 may also include one or more clips of a second type (e.g., second clip 432). As shown in the figures, for example, the second clip 432 may be approximately or substantially perpendicular to one or more of the first clips 430. Similarly to the first clips 430, the second clips 432 may include a number of spikes 431. In some examples, the at least one first clip 430 and the at least one second clip 432 are located on the plate 404 such that the bracket 400 is configured to connect to a corner of a frame or rail (such as rail 155) or protrusion. In some examples, the base 402 may comprise one or more potting openings 418 configured to receive potting material into the housing (such as housing 150) of a power device (such as an optimizer, a junction box, a rapid shutdown device, or an electronics housing). The one or more potting openings 418 may be configured to enable two-step potting such as described in greater detail elsewhere herein.

The plate 404 may include an elongated opening 420. The elongated opening may be configured for attaching the plate to the PV system, for example, using an attachment device 130 (e.g., a rivet, a bolt, a screw, and the like). The elongated opening 420 may extend towards the base 402 and/or towards the connecting element 406. The elongated opening 420 may extend along at least a portion of a longitudinal axis of the plate 404.

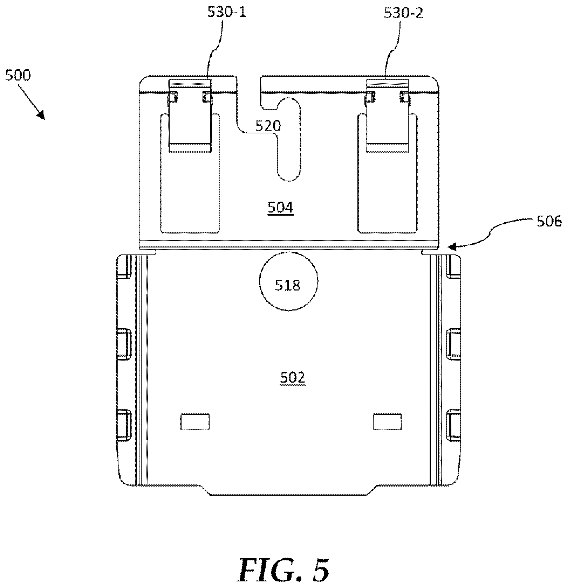

Reference is made to FIG. 5, which shows a front view schematic illustration of an example bracket. The bracket 500 as shown in FIG. 5 may include one or more aspects of any one or more of the bracket 100/200/300/400 of FIG. 1A, FIG. 1B, FIG. 2, FIG. 3A, FIG. 3B, FIG. 4A, FIG. 4B, FIG. 4C, and FIG. 4D as described herein. The bracket 500 may be incorporated in the PV system such as the one described above, in addition to, or in place of any one or more of the brackets 100/200/300/400. The reference numbers of FIG. 5 may correspond to reference numbers of FIG. 1A, FIG. 1B, FIG. 2, FIG. 3A, FIG. 3B, FIG. 4A, FIG. 4B, FIG. 4C, and FIG. 4D (for example, the base 102 and base 502, the plate 104 and 504, etc.) in order to transfer properties and features which may be common. For example, the plate 504 may have one or more of the same characteristics as those of the plate 104.

The bracket 500 may comprise a base 502, a plate 504, and a connecting element 506. In some examples, the base 502 may comprise one or more potting openings 518 configured to receive potting material into the housing (such as housing 150) of a power device (such as an optimizer, a junction box, a rapid shutdown device, or an electronics housing). The one or more potting openings 518 may be configured to enable two-step potting such as described in greater detail elsewhere herein.

The plate 504 may include an elongated opening 520. The elongated opening may be configured for attaching the plate to the PV system, for example, using an attachment device 130 (e.g., a rivet, a bolt, a screw, and the like). The elongated opening 520 may extend towards the base 502 and/or towards the connecting element 506. The elongated opening 520 may extend along at least a portion of a longitudinal axis of the plate 504.

Bracket 500 may include one or more clips of a first type (such as clips 530-1 and 530-2, collectively referred to as first clips 530). While the figures show the plate 504 with only two first clips 530 (such as clips 530-1 and 530-2), it should be appreciated that any suitable number of first clips 530 could be used and still be within the scope of this disclosure. The bracket 500 may be devoid of any second clips, or in other words, all of the clips of the bracket 500 may be disposed along a same edge of the plate 504.

First clips 530 may comprise a number of spikes, and the first clips 530 may be fixed onto a first side of a rail or frame (such as rail 155). The spikes of the first clips 530 may be similar to or have similar characteristics as the spikes of first clips 430 of FIG. 4A, FIG. 4B, and FIG. 4C as described in greater detail herein.

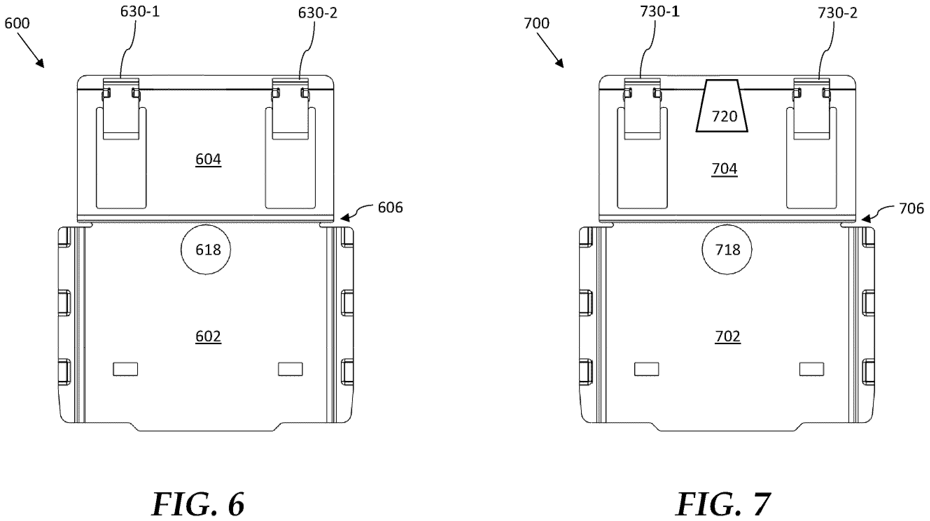

Reference is made to FIG. 6, which shows a front view schematic illustration of an example bracket. The bracket 600 as shown in FIG. 6 may include one or more aspects of any one or more of the bracket 100/200/300/400/500 of FIG. 1A, FIG. 1B, FIG. 2, FIG. 3A, FIG. 3B, FIG. 4A, FIG. 4B, FIG. 4C, FIG. 4D, and FIG. 5 as described herein. The bracket 600 may be incorporated in the PV system such as the one described above, in addition to, or in place of any one or more of the brackets 100/200/300/400/500. The reference numbers of FIG. 6 may correspond to reference numbers of FIG. 1A, FIG. 1B, FIG. 2, FIG. 3A, FIG. 3B, FIG. 4A, FIG. 4B, FIG. 4C, FIG. 4D, and FIG. 5 (for example, the base 102 and base 602, the plate 104 and 604, etc.) in order to transfer properties and features which may be common. For example, the base 602 may have one or more of the same characteristics as those of the base 102.

The bracket 600 may comprise a base 602, a plate 604, and a connecting element 606. The base 602 may comprise one or more potting openings 618 similar to the potting openings 418, the description of which will not be repeated herein.

Bracket 600 may also include one or more clips of a first type (such as clips 630-1 and 630-2, collectively referred to as first clips 630). First clips 630 may comprise a number of spikes, and the first clip 630 may be fixed onto a first side of a rail or frame (such as rail 155). The first clips 630 and spikes may be similar to the first clips 430 and their spikes, and will not be described again herein. The bracket 600 maybe devoid of any second clips, or in other words, all of the clips of the bracket 600 may be disposed along a same edge of the plate 604.

The plate 604 may be devoid of an elongated opening, such as the elongated opening 420 of FIG. 4A, FIG. 4B, and FIG. 4C as described in greater detail herein. The bracket 600 may be configured to attach to the PV system without using an additional attachment device (e.g., the attachment device 130), such as, for example, a rivet, a bolt, a screw, and the like. A bracket devoid of an elongated opening may enable a quick installation of the bracket 600 and/or the housing to the PV system. A bracket devoid of an elongated opening may enable an easy installation of the bracket 600 and/or the housing to the PV system, without any installation tools.

Reference is made to FIG. 7, which shows a front view schematic illustration of an example bracket. The bracket 700 as shown in FIG. 7 may include one or more aspects of any one or more of the bracket 100/200/300/400/500/600 of FIG. 1A, FIG. 1B, FIG. 2, FIG. 3A, FIG. 3B, FIG. 4A, FIG. 4B, FIG. 4C, FIG. 4D, FIG. 5, and FIG. 6 as described herein. The bracket 700 may be incorporated in the PV system such as the one described above, in addition to, or in place of any one or more of the brackets 100/200/300/400/500/600. The reference numbers of FIG. 7 may correspond to reference numbers of FIG. 1A, FIG. 1B, FIG. 2, FIG. 3A, FIG. 3B, FIG. 4A, FIG. 4B, FIG. 4C, FIG. 4D, FIG. 5, and FIG. 6 (for example, the base 102 and base 702, the plate 104 and 704, etc.) in order to transfer properties and features which may be common. For example, the base 702 may have one or more of the same characteristics as those of the base 602.

The bracket 700 may comprise a base 702, a plate 704, and a connecting element 706. The base 702 may comprise one or more potting openings 718 similar to the potting openings 418, the description of which will not be repeated herein.

The plate 704 may include an elongated opening 720. The elongated opening may be configured for attaching the plate to the PV system, for example, using an attachment device 130 (e.g., a rivet, a bolt, a screw, and the like). The elongated opening 720 may extend towards the base 702 and/or towards the connecting element 706. The elongated opening 720 may extend along at least a portion of a longitudinal axis of the plate 704. The elongated opening 720 may be trapezoid shaped.

Bracket 700 may include one or more clips of a first type (such as clips 730-1 and 730-2, collectively referred to as first clips 730). First clips 730 may comprise a number of spikes, and the first clip 730 may be fixed onto a first side of a rail or frame (such as rail 155). The first clips 730 and spikes may be similar to the first clips 430 and their spikes, and will not be described again herein. The bracket 700 may be devoid of any second clips, or in other words, all of the clips of the bracket 700 may be disposed along a same edge of the plate 704.

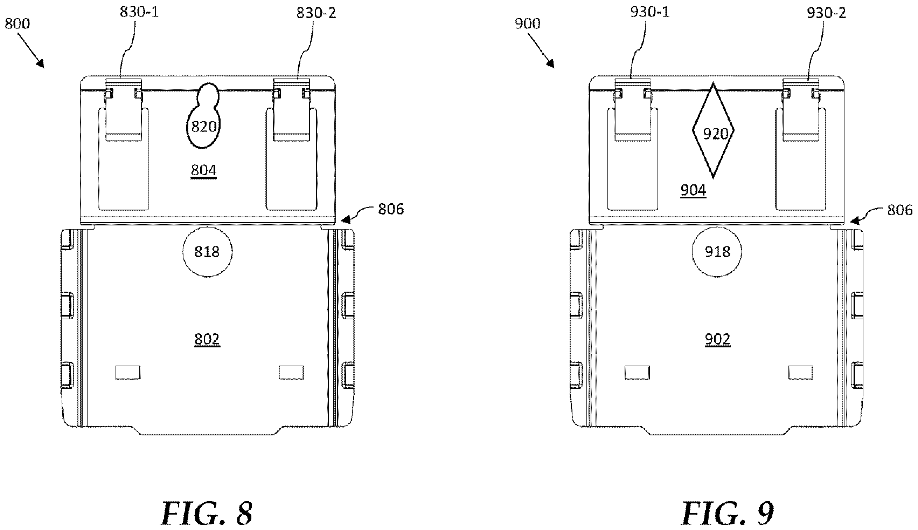

Reference is made to FIG. 8, which shows a front view schematic illustration of an example bracket. The bracket 800 as shown in FIG. 8 may include one or more aspects of any one or more of the bracket 100/200/300/400/500/600/700 of FIG. 1A, FIG. 1B, FIG. 2, FIG. 3A, FIG. 3B, FIG. 4A, FIG. 4B, FIG. 4C, FIG. 4D, FIG. 5, FIG. 6, and FIG. 7 as described herein. The bracket 800 may be incorporated in the PV system such as the one described above, in addition to, or in place of any one or more of the brackets 100/200/300/400/500/600/700. The reference numbers of FIG. 8 may correspond to reference numbers of FIG. 1A, FIG. 1B, FIG. 2, FIG. 3A, FIG. 3B, FIG. 4A, FIG. 4B, FIG. 4C, FIG. 4D, FIG. 5, FIG. 6, and FIG. 7 (for example, the base 102 and base 802, the plate 104 and 804, etc.) in order to transfer properties and features which may be common. For example, the base 802 may have one or more of the same characteristics as those of the base 302.

The bracket 800 may comprise a base 802, a plate 804, and a connecting element 806. The base 802 may comprise one or more potting openings 818 similar to the potting openings 418, the description of which will not be repeated herein.

The plate 804 may include an elongated opening 820 comprising at least two fluctuation points. The geometrical shape of the elongated opening may have a plurality of fluctuation points. The elongated opening may be slanted in relation to a longitudinal axis of the housing, the plate 804, or the base 802.

The bracket 800 may include one or more clips of a first type (such as clips 830-1 and 830-2, collectively referred to as first clips 830). First clips 830 may comprise a number of spikes, and the first clip 830 may be fixed onto a first side of a rail or frame (such as rail 155). The first clips 830 and spikes may be similar to the first clips 430 and their spikes, and will not be described again herein. The bracket 800 may be devoid of any second clips, or in other words, all of the clips of the bracket 800 may be disposed along a same edge of the plate 804.

Reference is made to FIG. 9, which shows a front view schematic illustration of an example bracket. The bracket 900 as shown in FIG. 9 may include one or more aspects of any one or more of the bracket 100/200/300/400/500/600/700/800 of FIG. 1A, FIG. 1B, FIG. 2, FIG. 3A, FIG. 3B, FIG. 4A, FIG. 4B, FIG. 4C, FIG. 4D, FIG. 5, FIG. 6, FIG. 7, and FIG. 8 as described herein. The bracket 900 may be incorporated in the PV system such as the one described above, in addition to, or in place of any one or more of the brackets 100/200/300/400/500/600/700/800. The reference numbers of FIG. 9 may correspond to reference numbers of FIG. 1A, FIG. 1B, FIG. 2, FIG. 3A, FIG. 3B, FIG. 4A, FIG. 4B, FIG. 4C, FIG. 4D, FIG. 5, FIG. 6, FIG. 7, and FIG. 8 (for example, the base 102 and base 902, the plate 104 and 904, etc.) in order to transfer properties and features which may be common. For example, the base 902 may have one or more of the same characteristics as those of the base 402.

The bracket 900 may comprise a base 902, a plate 904, and a connecting element 906. The base 902 may comprise one or more potting openings 918 similar to the potting openings 418, the description of which will not be repeated herein.

The plate 904 may include an elongated opening 920 comprising at least one wider portion and at least one thinner portion. The geometrical shape of the elongated opening may include a diamond shape. The elongated opening 820 may be wider in a middle portion thereof. In other words, the elongated opening 820 may increase in width towards a middle portion thereof.

The bracket 900 may include one or more clips of a first type (such as clips 930-1 and 930-2, collectively referred to as first clips 930). First clips 930 may comprise a number of spikes, and the first clip 930 may be fixed onto a first side of a rail or frame (such as rail 155). The first clips 930 and spikes may be similar to the first clips 430 and their spikes, and will not be described again herein. The bracket 900 may be devoid of any second clips, or in other words, all of the clips of the bracket 900 may be disposed along a same edge of the plate 904.

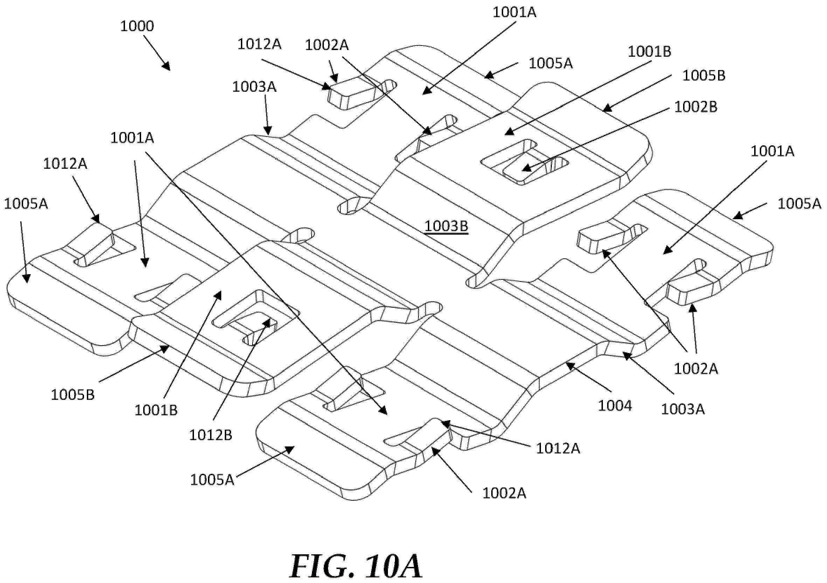

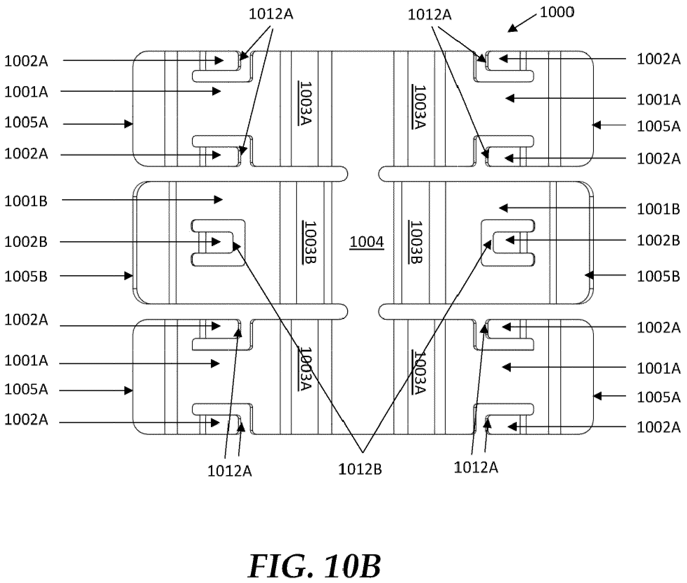

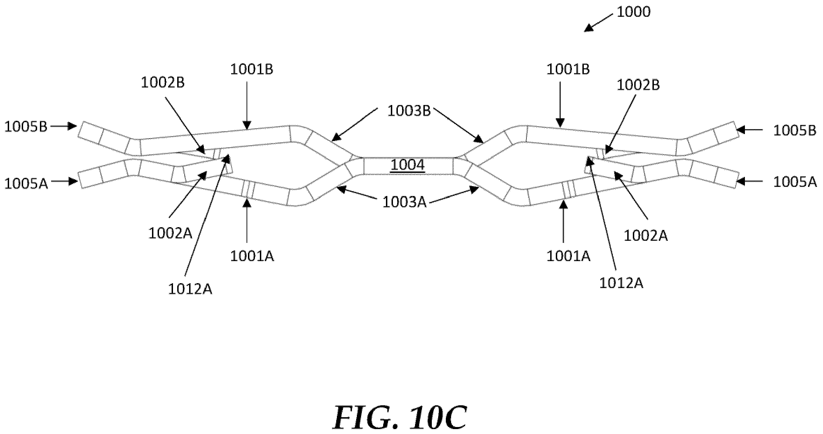

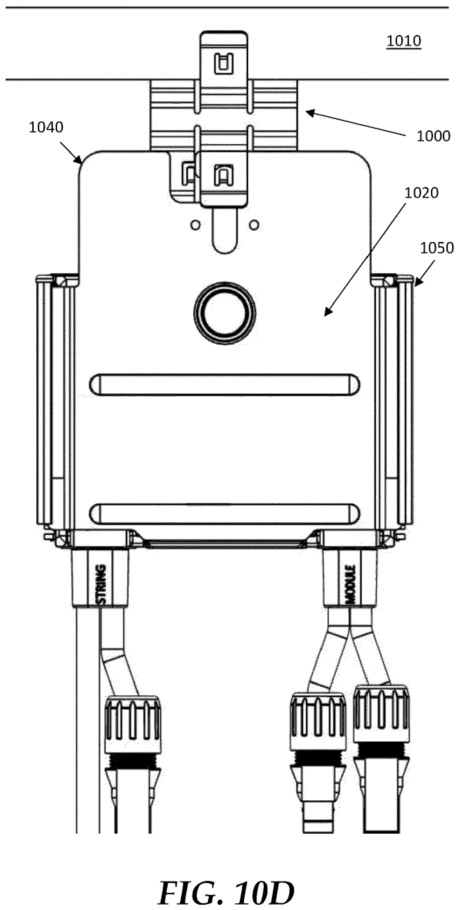

Reference is made to FIGs. 10A, 10B, 10C, and 10D, which show views of a schematic illustration of an example retrofit bracket 1000. The retrofit bracket or clip 1000 as shown in FIGs. 10A, 10B, 10C, and 10D may include a central portion 1004, and two clip structures on either side of the central portion 1004. The clip structures may comprise sections, bends, and curves, that are configured to attach the clip to (or to clamp to) a part of the power generation system. For example, the two structures on either side of the central portion 1004 may include sections (1001A, 1003A, 1005A, 1001B, 1003B, and 1005B) to form clips. The sections may be separated by bends or curves. The bends or curves may be configured to position the sections of the clip 1000 for attachment to an attachment point, such as a frame, a flange, or a protrusion of the power generation system. For example, the clip 1000 may be configured to attach (e.g., clamp) to a frame of a photovoltaic panel. For example, the clip 1000 may be configured to attach (e.g., clamp) to a protrusion of a power device. For example, the clip 1000 may be configured to attach (e.g., clamp) to a rail of a photovoltaic panel mounting structure. The sections may include spikes (1002A and 1002B) where the spikes may include sharp edges (1012A and 1012B) that press against an attachment point 1010 such as a frame, edge, rail, or flange of the power generation system, such as a PV system. For example, a bracket 100/200/300/400/500/600/700/800/900/1000 may attach to a frame of a photovoltaic panel, a flange protruding from a power device of the PV system, a mounting frame for photovoltaic panels, or other structure of the system that can support the weight of the power device. The retrofit bracket 1000 may attach on one side to an attachment point 1010, and on the other side to a protrusion 1040 of a back plate 1020 of a power device 1050, such as an optimizer, a junction box, a rapid shutdown device, or an electronics housing. The retrofit bracket 1000 (e.g., with the sections, bends, curves) may create a clamping distance relative to the frame, the flange, the rail, or the protrusion. In other words, the retrofit bracket 1000 (e.g., with the sections, bends, curves) may create a gap or clearance between the attachment point of the power generation system and the power device.

Hereinafter, various characteristics will be highlighted in a set of numbered clauses. These characteristics are not to be interpreted as being limiting on the invention or inventive concept, but are provided merely as a highlighting of some characteristics as described herein, without suggesting a particular order of importance or relevancy of such characteristics.

Clause 1. A bracket, comprising: a base configured to connect to a housing of a power device; a plate configured to attach to a rail of a photovoltaic panel system, wherein the plate is configured to abut a first surface of the rail; a connecting element extending between the base and the plate, wherein the connecting element positions the base at an offset in relation to the plate; and at least one shelf protruding from the plate, the at least one shelf being shaped to abut a second surface of the rail, thereby limiting movement of the housing of the power device in relation to the rail.

Clause 2. The bracket of clause 1, wherein the connecting element is shaped to position the power device at an offset relative to the first surface of the rail.

Clause 3. The bracket of clause 1 or 2, wherein the base and the plate are approximately parallel.

Clause 4. The bracket of any one of clauses 1 to 3, wherein a first surface of the base and a second surface of the plate are approximately parallel.

Clause 5. The bracket of any one of clauses 1 to 4, wherein the connecting element comprises at least one portion approximately perpendicular to at least one of the base and the plate.

Clause 6. The bracket of any one of clauses 1 to 5, wherein the connecting element comprises at least one portion perpendicular to at least one of a first surface of the base and a second surface of the plate.

Clause 7. The bracket of any one of clauses 1 to 6, wherein the shelf is rigid or semi-rigid.

Clause 8. The bracket of any one of clauses 1 to 7, wherein the connecting element is rigid or semi-rigid.

Clause 9. The bracket of any one of clauses 1 to 8, wherein a distance between the plate and the base is at least 5mm.

Clause 10. The bracket of any one of clauses 1 to 9, wherein the base comprises a potting opening configured to receive potting material into the housing of the power device.

Clause 11. The bracket of any one of clauses 1 to 10, wherein the plate comprises an elongated opening, and wherein a width of the opening varies along a length of the opening.

Clause 12. The bracket of any one of clauses 1 to 11, wherein the plate comprises an elongated opening, wherein the opening extends towards the connecting element, and wherein a first width of the elongated opening at a first end is less than a second width of the elongated opening at a second end.

Clause 13. The bracket of clause 12, wherein the elongated opening is bell-shaped.

Clause 14. The bracket of any one of clauses 1 to 13, wherein the bracket is thermally conductive.

Clause 15. The bracket of any one of clauses 1 to 14, wherein the offset is at least 10 mm.

Clause 16. The bracket of any one of clauses 1 to 15, wherein a distance between the at least one shelf and the housing is at least 5mm.

Clause 17. A bracket, comprising: a base configured to connect to a housing of a power device; a plate configured to attach to a protrusion of a power generation system; a connecting element extending between the base and the plate; and at least one first clip extending from the plate, wherein the at least one first clip is configured to fix onto the protrusion, thereby limiting movement of the housing of the power device in relation to the protrusion.

Clause 18. The bracket of clause 17, wherein the at least one first clip comprises at least one spike, wherein the at least one spike comprises at least one sharp edge or point, wherein the sharp edge or point comprises a cross section angle of between 45 and 135 degrees.

Clause 19. The bracket of clauses 17 or 18, wherein the at least one first clip is shaped to fix onto a first side of the protrusion.

Clause 20. The bracket of any one of clauses 17 to 18, further comprising at least one second clip, wherein the at least one second clip is approximately perpendicular to the at least one first clip.

Clause 21. The bracket of clause 20, wherein the at least one second clip comprises at least one spike.

Clause 22. The bracket of clause 21, wherein the at least one spike comprises at least one sharp edge or point, and wherein the sharp edge or point comprises a cross section angle of between 45 and 135 degrees.

Clause 23. The bracket of clause 20, wherein the at least one first clip and the at least one second clip are located on the plate such that the bracket is configured to connect to a corner of the frame.

Clause 24. The bracket of any one of clauses 17 to 23, wherein a distance between the plate and the base is at least 5 mm.

Clause 25. The bracket of any one of clauses 17 to 24, wherein the connecting element positions the base in relation to the plate at an offset of at least 1 mm.

Clause 26. The bracket of any one of clauses 17 to 25, wherein the base and the plate are approximately parallel.

Clause 27. The bracket of any one of clauses 17 to 26, wherein the connecting element comprises at least one portion approximately perpendicular to at least one of the base and the plate.

Clause 28. The bracket of any one of clauses 17 to 27, wherein the connecting element is rigid or semi-rigid.

Clause 29. The bracket of any one of clauses 17 to 28, wherein the base comprises a potting opening configured to receive potting material into the housing of the power device.

Clause 30. The bracket of any one of clauses 17 to 29, wherein the bracket is thermally conductive.

Clause 31. A bracket, comprising: a central portion; and a plurality of clips on a perimeter of the central portion, wherein the plurality of clips are configured to clamp to a frame, a flange, a rail, or a protrusion of a power generation system or component thereof; wherein each of the plurality of clips comprises: sections; and bends or curves, wherein the sections and bends or curves are configured to create a clamping distance relative to the frame, the flange, the rail, or the protrusion.

Clause 32. The bracket of clause 31, wherein at least one clip of the plurality of clips comprises at least one spike, wherein the at least one spike comprises at least one sharp edge or point, and wherein the sharp edge or point comprises a cross section angle of between 45 and 135 degrees.

Clause 33. The bracket of clause 31 or 32, wherein at least one clip of the plurality of clips is shaped to fix onto a first side of the frame.

Clause 34. The bracket of any one of clauses 31 to 33, wherein a first clip of the plurality of clips is approximately perpendicular to a second clip of the plurality of clips.

Clause 35. The bracket of clause 34, wherein the first clip and the second clip each comprises at least one spike.

Clause 36. The bracket of clause 35, wherein the at least one spike comprises at least one sharp edge or point, wherein the sharp edge or point comprises a cross section angle of between 45 and 135 degrees.

Clause 37. The bracket of clause 34, wherein the first clip and the second clip are located on the central portion such that the bracket is configured to connect to a corner of the frame.

Clause 38. The bracket of any one of clauses 31 to 37, wherein the central portion is rigid or semi-rigid.

Clause 39. The bracket of any one of clauses 31 to 38, wherein the bracket is thermally conductive.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A bracket, comprising:
a base configured to connect to a housing of a power device;
a plate configured to attach to a protrusion of a power generation system;
a connecting element extending between the base and the plate; and
at least one first clip extending from the plate, wherein the at least one first clip is configured to fix onto the protrusion, thereby limiting movement of the housing in relation to the protrusion.

2. The bracket of claim 1, wherein the at least one first clip comprises at least one spike, wherein the at least one spike comprises at least one sharp edge or point, and wherein the sharp edge or point comprises a cross section angle of between 45 and 135 degrees.

3. The bracket of any of the preceding claims, wherein the at least one first clip is shaped to fix onto a first side of the protrusion.

4. The bracket of any of the preceding claims, further comprising at least one second clip, wherein the at least one second clip is approximately perpendicular to the at least one first clip.

5. The bracket of the preceding claim, wherein the at least one second clip comprises at least one spike.

6. The bracket of the preceding claim, wherein the at least one spike comprises at least one sharp edge or point, wherein the sharp edge or point comprises a cross section angle of between 45 and 135 degrees.

7. The bracket of claim 4, wherein the at least one first clip and the at least one second clip are located on the plate such that the bracket is configured to connect to a corner of the protrusion.

8. The bracket of any of the preceding claims, wherein a distance between the plate and the base is at least 5 mm.

9. The bracket of any of the preceding claims, wherein the connecting element positions the base in relation to the plate at an offset of at least 1 mm.

10. The bracket of any of the preceding claims, wherein the base and the plate are approximately parallel.

11. The bracket of any of the preceding claims, wherein the connecting element comprises at least one portion approximately perpendicular to at least one of the base and the plate.

12. The bracket of any of the preceding claims, wherein the connecting element is rigid or semi-rigid.

13. The bracket of any of the preceding claims, wherein the base comprises a potting opening configured to receive potting material into the housing of the power device.

14. The bracket of any of the preceding claims, wherein the bracket is thermally conductive.

15. A bracket, comprising:
a central portion; and
a plurality of clips on a perimeter of the central portion, wherein the plurality of clips are configured to clamp to a frame, a flange, a rail, or a protrusion of a power generation system or component thereof;
wherein each of the plurality of clips comprises:
sections; and
bends or curves, wherein the sections and bends or curves are configured to create a clamping distance relative to the frame, the flange, the rail, or the protrusion.
